# EUROPEAN PATENT APPLICATION

(11) **EP 2 713 254 A1**
(43) Date of publication of application: **02.04.2014**
(21) Application number: 12876591.4
(22) Date of filing: 30.07.2012
(51) Int. Cl.: G06F 3/048

(54) **TOUCH EVENT REPORTING METHOD, DEVICE AND MOBILE TERMINAL**

(71) Applicant: Huawei Device Co., Ltd., Shenzhen, Guangdong 518129 (CN)
(72) Inventor: CHEN, Lei, Shenzhen Guangdong 518129 (CN)
(74) Representative: Thun, Clemens
(86) International application number: PCT/CN2012/079370
(87) International publication number: WO 2014/019124

(57) **Abstract**

Embodiments of the present invention provide a method and an apparatus for reporting a touch event, and a mobile terminal, and relate to the field of data processing technologies. The method for reporting a touch event includes: receiving touch data collected by an inductance capacitance touch screen; and encapsulating the touch data collected by the inductance capacitance touch screen into a touch event corresponding to a mutual capacitive touch screen and reporting the touch event to an application program. With the present invention, the touch data collected by the inductance capacitance touch screen is encapsulated into the touch event corresponding to the mutual capacitive touch screen and the touch event is reported, thereby solving the problem that an application program of an earlier version cannot be used when a mobile terminal can receive only the touch data collected by the inductance capacitance touch screen, and reaching the technical effect that the application program that only supports the processing only of the touch event reported by the mutual capacitive touch screen can still be used even if the mobile terminal can receive only the touch data collected by the inductance capacitance touch screen.

## Description

### FIELD OF THE INVENTION

The present invention relates to the field of data processing technologies, and in particular, to a method and an apparatus for reporting a touch event, and a mobile terminal.

### BACKGROUND OF THE INVENTION

More and more mobile terminals, such as smart phones, tablets, and ebook readers, use capacitive touch screens as peripherals to interact with users. Capacitive touch screens are classified into two types: mutual capacitive touch screen and inductance capacitance touch screen. The mutual capacitive touch screen may implement multi-point touch detection; the inductance capacitance touch screen may implement floating touch detection.

An earlier mobile terminal usually uses only one mutual capacitive touch screen. With the development of the touch technology, a later mobile terminal usually uses the combination of a mutual capacitive touch screen and an inductance capacitance touch screen to simultaneously implement a multi-point touch and a single-point floating touch. In this case, the touch data collected by the mutual capacitive touch screen and inductance capacitance touch screen is reported at a driver layer by two different interfaces and events, respectively, and the specific method for reporting a touch event is as follows:
1. The mutual capacitive touch screen or inductance capacitance touch screen sends an interrupt signal to the driver layer when touch data is collected.
2. The driver layer receives the touch data, and determines, according to the interrupt signal, whether the touch data is touch data collected by the mutual capacitive touch screen or touch data collected by the inductance capacitance touch screen.
3. If it is determined that it is the touch data collected by the mutual capacitive touch screen, the driver layer encapsulates the touch data in the form of an event corresponding to the mutual capacitive touch screen, and reports the touch event to an application program using an interface corresponding to the mutual capacitive touch screen.
4. If it is determined that it is the touch data collected by the inductance capacitance touch screen, the driver layer encapsulates the touch data in the form of an event corresponding to the inductance capacitance touch screen, and inductance capacitance reports the touch event to an application program using an interface corresponding to the inductance capacitance touch screen.

However, in a practical use process, the following scenario may occur: The application program of an earlier version only supports the processing of the touch event reported by the mutual capacitive touch screen; only the application program of a later version supports the processing of the touch events reported by both the mutual capacitive touch screen and the inductance capacitance touch screen. When the mobile terminal can receive only the touch data collected by the inductance capacitance touch screen, the application program of the earlier version cannot be used. In other words, the application program that only supports the processing of the touch event reported by the mutual capacitive touch screen cannot be used.

### SUMMARY OF THE INVENTION

To solve the problem that an application program of an earlier version cannot be used when a mobile terminal can receive only touch data collected by an inductance capacitance touch screen, embodiments of the present invention provide a method and an apparatus for reporting a touch event, and a mobile terminal. Technical solutions are as follows:
In a first aspect, a method for reporting a touch event is provided and includes:
   receiving touch data collected by an inductance capacitance touch screen; and
   encapsulating the touch data collected by the inductance capacitance touch screen into a touch event corresponding to a mutual capacitive touch screen and reporting the touch event to an application program.

In a first possible implementation manner of the first aspect, the touch data collected by the inductance capacitance touch screen includes coordinates of a touch point, and the touch event corresponding to the mutual capacitive touch screen includes coordinates of a touch point; and
the encapsulating the touch data collected by the inductance capacitance touch screen into the touch event corresponding to the mutual capacitive touch screen and reporting the touch event to the application program specifically include:
using the coordinates of the touch point in the touch data as the coordinates of the touch point in the touch event; and
reporting the touch event to the application program by using an interface corresponding to the mutual capacitive touch screen.

In combination with the first possible implementation manner of the first aspect, in a second possible implementation manner of the first aspect, the touch data collected by the inductance capacitance touch screen further includes a touch distance, and the touch event corresponding to the mutual capacitive touch screen further includes a touch area, touch pressure, and a touch direction; and
the encapsulating the touch data collected by the inductance capacitance touch screen into the touch event corresponding to the mutual capacitive touch screen and reporting the touch event to the application program specifically include:
using the coordinates of the touch point in the touch data as the coordinates of the touch point in the touch event;
setting the touch area, the touch pressure, and the touch direction in the touch event to their respective predetermined values; or according to predetermined correspondence between the value of the touch distance and the touch area and predetermined correspondence between the value of the touch distance and touch pressure, querying a value of the touch area and a value of the touch pressure corresponding to the touch distance; setting the value of the touch area in the touch event to the found value of the touch area, and setting the value of the touch pressure in the touch event to the found value of the touch pressure; and setting the touch direction in the touch event to a predetermined value; and
reporting the touch event to the application program by using the interface corresponding to the mutual capacitive touch screen;
where the predetermined correspondence includes: the value of the touch distance being in inverse proportion to the touch area, and the value of the touch distance being in inverse proportion to the touch pressure.

In combination with the first aspect or the first possible implementation manner of the first aspect or the second possible implementation manner of the first aspect, in a third possible implementation manner of the first aspect, the touch data collected by the inductance capacitance touch screen includes the touch distance; and
the encapsulating the touch data collected by the inductance capacitance touch screen into the touch event corresponding to the mutual capacitive touch screen and reporting the touch event to the application program specifically include:
encapsulating only touch data meeting a first predetermined condition into the touch event corresponding to the mutual capacitive touch screen and reporting the touch event to the application program, where the first predetermined condition is that the touch distance in the touch data is greater than a first threshold and smaller than a second threshold.

In combination with the first aspect or the first possible implementation manner of the first aspect or the second possible implementation manner of the first aspect or the third possible implementation manner of the first aspect, in a fourth possible implementation manner of the first aspect, the touch data collected by the inductance capacitance touch screen includes the touch distance; and before the encapsulating the touch data collected by the inductance capacitance touch screen into the touch event corresponding to the mutual capacitive touch screen and reporting the touch event to the application program, the method further includes:
determining whether only the touch data collected by the inductance capacitance touch screen is received within a predetermined period of time, where the touch distance in the touch data is greater than the first threshold and smaller than the second threshold; and
if a determination result is yes, performing the step of encapsulating the touch data collected by the inductance capacitance touch screen into the touch event corresponding to the mutual capacitive touch screen and reporting the touch event to the application program.

In combination with the first aspect or the first possible implementation manner of the first aspect or the second possible implementation manner of the first aspect or the third possible implementation manner of the first aspect, in a fifth possible implementation manner of the first aspect, the touch data collected by the inductance capacitance touch screen includes the touch distance; and before the encapsulating the touch data collected by the inductance capacitance touch screen into the touch event corresponding to the mutual capacitive touch screen and reporting the touch event to the application program, the method further includes:
receiving an encapsulation instruction signal, where the encapsulation instruction signal is a signal triggered when a predetermined application program receives only a touch event corresponding to the inductance capacitance touch screen within a predetermined period of time and a touch distance in the touch event is greater than the first threshold and smaller than the second threshold; and
after receiving the encapsulation instruction signal, performing the step of encapsulating the touch data collected by the inductance capacitance touch screen into the touch event corresponding to the mutual capacitive touch screen and reporting the touch event to the application program.

In combination with the fifth possible implementation manner of the first aspect, in a sixth possible implementation, the predetermined application program is a screen unlocking application program and the predetermined period of time is a period of time corresponding to a screen unlocking process.

In combination with the fourth possible implementation manner of the first aspect or the fifth possible implementation manner of the first aspect or the sixth possible implementation manner of the first aspect, in a seventh possible implementation manner of the first aspect, after the encapsulating the touch data collected by the inductance capacitance touch screen into the touch event corresponding to the mutual capacitive touch screen and reporting the touch event to the application program, the method further includes:
determining whether touch data collected by the mutual capacitive touch screen is received; and
if a determination result is yes, encapsulating the touch data collected by the inductance capacitance touch screen into the touch event corresponding to the inductance capacitance touch screen and reporting the touch event.

In combination with the fifth possible implementation manner of the first aspect, in an eighth possible implementation manner of the first aspect, if the encapsulating the touch data collected by the inductance capacitance touch screen into the touch event corresponding to the mutual capacitive touch screen and reporting the touch event to the application program specifically include: setting the touch area, the touch pressure, and the touch direction in the touch event to their respective predetermined values,
after the encapsulating the touch data collected by the inductance capacitance touch screen into the touch event corresponding to the mutual capacitive touch screen and reporting the touch event to the application program, the method further includes:
receiving an encapsulation recovery signal, where the encapsulation recovery signal is a signal triggered when the predetermined application program receives the touch event corresponding to the mutual capacitive touch screen and the touch event meets a second predetermined condition, where the second predetermined condition is that any one of the touch area, the touch pressure, and the touch direction in the touch event is not a predetermined value; and
after receiving the encapsulation recovery signal, encapsulating the touch data collected by the inductance capacitance touch screen into the touch event corresponding to the inductance capacitance touch screen and reporting the touch event.

In a second aspect, an apparatus for reporting a touch event is provided and includes:
a data receiving module, configured to receive touch data collected by an inductance capacitance touch screen; and
an event reporting module, configured to encapsulate the touch data collected by the inductance capacitance touch screen into a touch event corresponding to a mutual capacitive touch screen and report the touch event to an application program.

In a first possible implementation manner of the second aspect, the touch data collected by the inductance capacitance touch screen includes coordinates of a touch point, and the touch event corresponding to the mutual capacitive touch screen includes coordinates of a touch point; and
the event reporting module specifically includes: an event encapsulating unit and an event reporting unit, where:
the event encapsulating unit is configured to use the coordinates of the touch point in the touch data as the coordinates of the touch point in the touch event; and
the event reporting unit is configured to report the touch event obtained by the event encapsulating unit to the application program by using an interface corresponding to the mutual capacitive touch screen.

In combination with the first possible implementation manner of the second aspect, in a second possible implementation manner of the second aspect, the touch data collected by the inductance capacitance touch screen further includes a touch distance, and the touch event corresponding to the mutual capacitive touch screen further includes a touch area, touch pressure, and a touch direction;
the event encapsulating unit is specifically configured to: use the coordinates of the touch point in the touch data as the coordinates of the touch point in the touch event; set the touch area, the touch pressure, and the touch direction in the touch event to their respective predetermined values; or according to predetermined correspondence between the value of the touch distance and the touch area and predetermined correspondence between the value of the touch distance and touch pressure, query a value of the touch area and a value of the touch pressure corresponding to the touch distance; set the value of the touch area in the touch event to the found value of the touch area, and set the value of the touch pressure in the touch event to the found value of the touch pressure; and set the touch direction in the touch event to a predetermined value; and
the event reporting unit is configured to report the touch event obtained by the event encapsulating unit to the application program by using the interface corresponding to the mutual capacitive touch screen;
where the predetermined correspondence includes: the value of the touch distance being in inverse proportion to the touch area, and the value of the touch distance being in inverse proportion to the touch pressure.

In combination with the second aspect or the first possible implementation manner of the second aspect or the second possible implementation manner of the second aspect, in a third possible implementation manner of the second aspect, the touch data collected by the inductance capacitance touch screen includes the touch distance; and
the event reporting module is specifically configured to encapsulate only touch data meeting a first predetermined condition into the touch event corresponding to the mutual capacitive touch screen and report the touch event to the application program, where the first predetermined condition is that the touch distance in the touch data is greater than a first threshold and smaller than a second threshold.

In combination with the second aspect or the first possible implementation manner of the second aspect or the second possible implementation manner of the second aspect or the third possible implementation manner of the second aspect, in a fourth possible implementation manner of the second aspect, the touch data collected by the inductance capacitance touch screen includes the touch distance; and the apparatus for reporting a touch event further includes a data determining module, where:
the data determining module is configured to determine whether only the touch data collected by the inductance capacitance touch screen is received within a predetermined period of time, where the touch distance in the touch data is greater than the first threshold and smaller than the second threshold; and

the event reporting module is specifically configured to: if a determination result of the data determining module is yes, perform the step of encapsulating the touch data collected by the inductance capacitance touch screen into the touch event corresponding to the mutual capacitive touch screen and reporting the touch event to the application program.

In combination with the second aspect or the first possible implementation manner of the second aspect or the second possible implementation manner of the second aspect or the third possible implementation manner of the second aspect, in a fifth possible implementation manner of the second aspect, the touch data collected by the inductance capacitance touch screen includes the touch distance; and the apparatus for reporting a touch event further includes an instruction receiving module, where:
the instruction receiving module is configured to receive an encapsulation instruction signal, where the encapsulation instruction signal is a signal triggered when a predetermined application program receives only a touch event corresponding to the inductance capacitance touch screen within a predetermined period of time and a touch distance in the touch event is greater than the first threshold and smaller than the second threshold; and
the event reporting module is specifically configured to: after the instruction receiving module receives the encapsulation instruction signal, perform the step of encapsulating the touch data collected by the inductance capacitance touch screen into the touch event corresponding to the mutual capacitive touch screen and reporting the touch event to the application program.

In combination with the fifth possible implementation manner of the second aspect, in a sixth possible implementation manner of the second aspect, the predetermined application program is a screen unlocking application program and the predetermined period of time is a period of time corresponding to a screen unlocking process.

In combination with the fourth possible implementation manner of the second aspect or the fifth possible implementation manner of the second aspect or the sixth possible implementation manner of the first aspect, in a seventh possible implementation manner of the second aspect, the apparatus for reporting a touch event further includes a data monitoring module and a data encapsulating module, where:
the data monitoring module is configured to determine whether touch data collected by the mutual capacitive touch screen is received; and
the data encapsulating module is configured to: if a determination result of the data monitoring module is yes, encapsulate the touch data collected by the inductance capacitance touch screen into the touch event corresponding to the inductance capacitance touch screen and report the touch event.

In combination with the fifth possible implementation manner of the second aspect, in an eighth possible implementation manner of the second aspect, the event encapsulating unit is specifically configured to use the coordinates of the touch point in the touch data as the coordinates of the touch point in the touch event, and set the touch area, the touch pressure, and the touch direction in the touch event to their respective predetermined values; and
the apparatus for reporting a touch event further includes a recovery receiving module and a data encapsulating module, where:
the recovery receiving module is configured to receive an encapsulation recovery signal, where the encapsulation recovery signal is a signal triggered when the predetermined application program receives the touch event corresponding to the mutual capacitive touch screen and the touch event meets a second predetermined condition, where the second predetermined condition is that any one of the touch area, the touch pressure, and the touch direction in the touch event is not a predetermined value; and
the data encapsulating module is configured to: after the recovery receiving module receives the encapsulation recovery signal, encapsulate the touch data collected by the inductance capacitance touch screen into the touch event corresponding to the inductance capacitance touch screen and report the touch event.

In a third aspect, a mobile terminal is provided, where the mobile terminal includes any apparatus for reporting a touch event according to the above technical solutions.

In a fourth aspect, a mobile terminal is provided, where the mobile terminal includes an inductance capacitance touch screen, a mutual capacitive touch screen, a memory, and a processor, and is configured to execute the above method for reporting a touch event.

The benefits of the technical solutions provided in the embodiments of the present invention are as follows:
The touch data collected by the inductance capacitance touch screen is encapsulated into the touch event corresponding to the mutual capacitive touch screen and the touch event is reported, thereby solving the problem that an application program of an earlier version cannot be used when a mobile terminal can receive only touch data collected by an inductance capacitance touch screen, and reaching the technical effect that the application program that only supports the processing of the touch event reported by the mutual capacitive touch screen can still be used even if the mobile terminal can receive only the touch data collected by the inductance capacitance touch screen.

### BRIEF DESCRIPTION OF THE DRAWINGS

To illustrate the technical solutions in the embodiments of the present invention more clearly, the following briefly describes the accompanying drawings for describing the embodiments of the present invention. Apparently, the accompanying drawings in the following description merely show some embodiments of the present invention, and persons of ordinary skill in the art can derive other drawings from these accompanying drawings without creative efforts.
FIG. 1 is a flowchart of a method for reporting a touch event according to a first embodiment of the present invention;
FIG. 2 is a flowchart of a method for reporting a touch event according to a second embodiment of the present invention;
FIG. 3 is a flowchart of a method for reporting a touch event according to a third embodiment of the present invention;
FIG. 4 is a flowchart of a method for reporting a touch event according to a fourth embodiment of the present invention;
FIG. 5 is a structural block diagram of an apparatus for reporting a touch event according to a fifth embodiment of the present invention;
FIG. 6 is another structural block diagram of an apparatus for reporting a touch event according to the fifth embodiment of the present invention;
FIG. 7 is a structural block diagram of an apparatus for reporting a touch event according to a sixth embodiment of the present invention;
FIG. 8 is another structural block diagram of an apparatus for reporting a touch event according to the sixth embodiment of the present invention;
FIG. 9 is still another structural block diagram of an apparatus for reporting a touch event according to the sixth embodiment of the present invention;
FIG. 10 is a structural block diagram of an apparatus for reporting a touch event according to a seventh embodiment of the present invention;
FIG. 11 is another structural block diagram of an apparatus for reporting a touch event according to the seventh embodiment of the present invention; and
FIG. 12 is a structural block diagram of a mobile terminal according to an eighth embodiment of the present invention.

### DETAILED DESCRIPTION OF THE EMBODIMENTS

To make the objectives, technical solutions, and advantages of the present invention clearer, the following further describes in further detail the technical solutions in the embodiments of the present invention with reference to the accompanying drawings.

First, the event form of a touch event corresponding to a mutual capacitive touch screen and an inductance capacitance touch screen in a normal case is described:

### I. Mutual capacitive reporting mode

When the mutual capacitive touch screen collects touch data, the touch data at a driver layer is encapsulated into the form of a touch event corresponding to the mutual capacitive touch screen, and then the touch event is uploaded to an application layer through a predetermined interface, and the form of a touch event corresponding to the mutual capacitive touch screen includes the following data:
1. coordinates of a touch point: X-Y;
2. touch area;
3. touch pressure; and
4. touch direction.

### II. Inductance capacitance reporting mode

When the inductance capacitance touch screen collects touch data, the touch data is encapsulated at a driver layer into the form of a inductance capacitance event, and then the touch event is uploaded to an application layer through another different predetermined interface, and the specific form of a touch event corresponding to the inductance capacitance touch screen includes the following data:
1. coordinates of a touch point: X-Y; and
2. touch distance, namely, the distance from a finger of a user to the surface of a screen.

### Embodiment 1

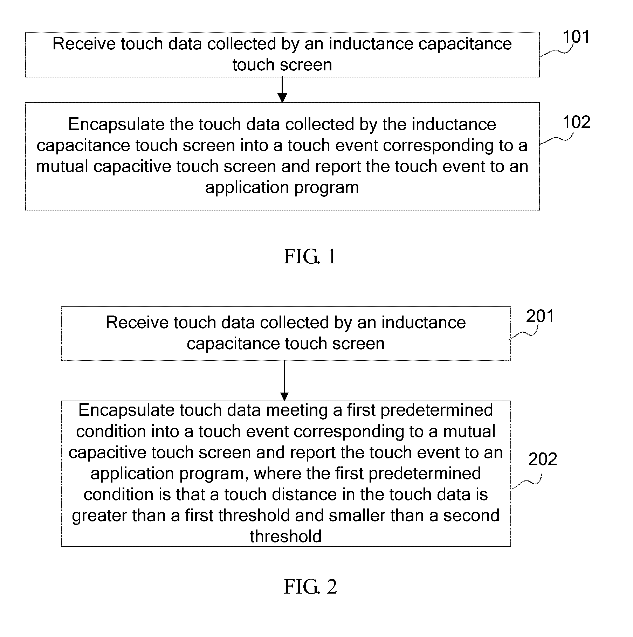

FIG. 1 is a flowchart of a method for reporting a touch event according to a first embodiment of the present invention. The method for reporting a touch event may specifically include:
Step 101: Receive touch data collected by an inductance capacitance touch screen.

A driver layer in a mobile terminal may receive the touch data collected by the inductance capacitance touch screen.
Step 102: Encapsulate the touch data collected by the inductance capacitance touch screen into a touch event corresponding to a mutual capacitive touch screen and report the touch event to an application program.

The driver layer in the mobile terminal may encapsulate the touch data collected by the inductance capacitance touch screen into the touch event corresponding to the mutual capacitive touch screen and report the touch event to the application program in the mobile terminal. Specifically, the step in which the driver layer encapsulates the touch data collected by the inductance capacitance touch screen into the touch event corresponding to the mutual capacitive touch screen may include: using coordinates of a touch point in the touch data collected by the inductance capacitance touch screen as coordinates of a touch point in the touch event corresponding to the mutual capacitive touch screen. For example, if the touch data collected by the inductance capacitance touch screen includes touch coordinates (X¹, Y¹) and a touch distance L, the driver layer may encapsulate the touch data into the touch event corresponding to the mutual capacitive touch screen: touch coordinates (X¹, Y¹), touch area (null), touch pressure (null), and touch direction (null).

Then, the driver layer reports the touch event to the application program through an interface corresponding to the mutual capacitive touch screen; after receiving the touch event, the application program that only supports the processing of the touch event reported by the mutual capacitive touch screen regards that the touch event is a touch event reported by the mutual capacitive touch screen, and therefore can continue running normally.

To sum up, with the method for reporting a touch event according to this embodiment, the touch data collected by the inductance capacitance touch screen is encapsulated into the touch event corresponding to the mutual capacitive touch screen and the touch event is reported, thereby solving the problem that an application program of an earlier version cannot be used when a mobile terminal can receive only the touch data collected by the inductance capacitance touch screen, and reaching the technical effect that the application program that only supports the processing of the touch event reported by the mutual capacitive touch screen can still be used even if the mobile terminal can receive only the touch data collected by the inductance capacitance touch screen.

In a practical use process, if the mobile terminal uses both the mutual capacitive touch screen and the inductance capacitance touch screen, then in two possible cases, the mobile terminal can receive only the touch data collected by the inductance capacitance touch screen: 1. a user always intentionally uses a floating touch mode to operate the mobile terminal; 2. the user operates the mobile terminal by wearing a glove. In the two cases, due to the insulation of the air and the glove, a finger cannot directly touch the mutual capacitive touch screen, and therefore cannot trigger the mutual capacitive touch screen to collect touch data.

For the first case, if the method for reporting a touch event according to the first embodiment is used, though an application program that only supports the processing of the touch event reported by the mutual capacitive touch screen can still be used, a weakness is that: A touch distance in the touch data collected by the inductance capacitance touch screen is discarded, and a running effect may not be good for an application program that supports the processing of the touch events reported by both the mutual capacitive touch screen and the inductance capacitance touch screen. Therefore, the method for reporting a touch event according to the first embodiment may be used properly only in the scenario where the user operates the mobile terminal by wearing a glove. Therefore, the following embodiment may be used for further reference:

### Embodiment 2

FIG. 2 is a flowchart of a method for reporting a touch event according to a second embodiment of the present invention. The method for reporting a touch event may be used in a mobile terminal that uses both a mutual capacitive touch screen and an inductance capacitance touch screen. The method for reporting a touch event may specifically include:
Step 201: Receive touch data collected by an inductance capacitance touch screen.

A driver layer in a mobile terminal may receive the touch data collected by the inductance capacitance touch screen.
Step 202: Encapsulate touch data meeting a first predetermined condition into a touch event corresponding to a mutual capacitive touch screen and report the touch event to an application program, where the first predetermined condition is that a touch distance in the touch data is greater than a first threshold and smaller than a second threshold.

The driver layer in the mobile terminal may encapsulate only the touch data, which is collected by the inductance capacitance touch screen and meets the first predetermined condition, into the touch event corresponding to the mutual capacitive touch screen and report the touch event to the application program in the mobile terminal. Specifically, after receiving the touch data collected by the inductance capacitance touch screen, the driver layer determines whether the touch distance in the touch data is greater than the first threshold and smaller than the second threshold, and if yes, the touch data is encapsulated into a touch event corresponding to the mutual capacitive touch screen; if no, the touch data is encapsulated into a touch event corresponding to the inductance capacitance touch screen. The first threshold and the second threshold may be values predetermined by research and development engineers, and may be calculated by statistics according to the thickness of each kind of glove.

Specifically, the step in which the driver layer encapsulates the touch data collected by the inductance capacitance touch screen into the touch event corresponding to the mutual capacitive touch screen may include: using coordinates of a touch point in the touch data collected by the inductance capacitance touch screen as coordinates of a touch point in the touch event corresponding to the mutual capacitive touch screen, and may further include one of the following two steps:
1. Set the touch area, the touch pressure, and the touch direction in the touch event to their respective predetermined values.
   For example, the touch data collected by the inductance capacitance touch screen includes touch coordinates (X¹, Y¹) and the touch distance L, and then the driver layer may encapsulate the touch data into the touch event corresponding to the mutual capacitive touch screen: touch coordinates (X¹, Y¹), touch area (a predetermined value), touch pressure (a predetermined value), and touch direction (a predetermined value). The predetermined value may be a value remaining unchanged.
2. According to predetermined correspondence between the value of the touch distance and the touch area and predetermined correspondence between the value of the touch distance and touch pressure, query a value of the touch area and a value of the touch pressure that are corresponding to the touch distance; set the value of the touch area in the touch event to the found value of the touch area, and set the value of the touch pressure in the touch event to the found value of the touch pressure; and set the touch direction in the touch event to a predetermined value. The predetermined correspondence includes: the value of the touch distance being in inverse proportion to the touch area, and the value of the touch distance being in inverse proportion to the touch pressure.

For example, the touch data collected by the inductance capacitance touch screen includes touch coordinates (X¹, Y¹) and the touch distance L, and then the driver layer may query the value S of the touch area and touch pressure P that are corresponding to L according to the predetermined correspondence between the value of the touch distance and the touch area and the predetermined correspondence between the value of the touch distance and touch pressure, and then the driver layer encapsulates the touch data into the touch event corresponding to the mutual capacitive touch screen: touch coordinates (X¹, Y¹), touch area (S), touch pressure (P), and touch direction (a predetermined value). The predetermined correspondence between the value of the touch distance and the touch area and the predetermined correspondence between the value of the touch distance and touch pressure may be calculated by research and development engineers according to data statistics at multiple touch times when the finger of a user touches a screen.

To sum up, compared with the first embodiment, in the method for reporting a touch event according to this embodiment, by determining the touch distance in the touch data collected by the inductance capacitance touch screen, whether the user operates the mobile terminal by wearing a glove or operates the mobile terminal without touching the surface of the screen can be distinguished, thereby reaching the effect of selectively encapsulating the touch data collected by the inductance capacitance touch screen into a touch event corresponding to the mutual capacitive touch screen, and ensuring the running effect of the application program that supports the processing of the touch event corresponding to the inductance capacitance touch screen.

However, in a practical use process, when the user operates the mobile terminal in a floating touch mode without wearing a glove, the touch distance in the touch data collected by the inductance capacitance touch screen may also be greater than the first threshold and smaller than the second threshold. To more correctly determine whether the user wears a glove to operate the mobile terminal, the following embodiment may be used for further reference:

### Embodiment 3

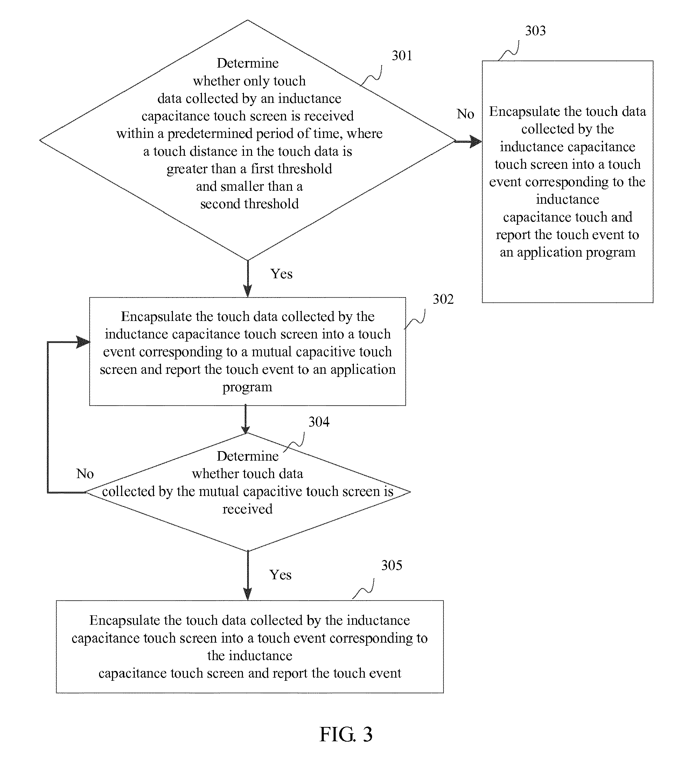

FIG. 3 is a flowchart of a method for reporting a touch event according to a third embodiment of the present invention. The method for reporting a touch event may be used in a mobile terminal that uses both a mutual capacitive touch screen and an inductance capacitance touch screen. The method for reporting a touch event may specifically include:
Step 301: Determine whether only touch data collected by an inductance capacitance touch screen is received within a predetermined period of time, where a touch distance in the touch data is greater than a first threshold and smaller than a second threshold; and if yes, go to step 302; if no, go to step 303.

In an initial state, a driver layer in a mobile terminal may continuously receive touch data collected by an inductance capacitance touch screen and a mutual capacitive touch screen, and determine, according to an interrupt signal, whether the touch data comes from the inductance capacitance touch screen or the mutual capacitive touch screen, and then report a touch event to an application program according to the method for reporting a touch event in the prior art.

In the above process, the driver layer in the mobile terminal may determine whether only the touch data collected by the inductance capacitance touch screen is received within a predetermined period of time, where a touch distance in the touch data is greater than the first threshold and smaller than the second threshold. The predetermined period of time may be 30 seconds, that is, the driver layer detects, at an interval of 30 seconds, whether all touch data received within the period of time comes from the inductance capacitance touch screen. The first threshold and the second threshold may be values predetermined by research and development engineers, and may be calculated by statistics according to the thickness of each kind of glove.

If the driver layer in the mobile terminal determines that only the touch data collected by the inductance capacitance touch screen is received within the predetermined period of time, where the touch distance in the touch data is greater than the first threshold and smaller than the second threshold, it may be regarded that a user wears a glove to operate the mobile terminal at present.

It should be noted that the above determination result only shows that it is possible but not definite that the user wears a glove to operate the mobile terminal at present.
Step 302: Encapsulate the touch data collected by the inductance capacitance touch screen into a touch event corresponding to a mutual capacitive touch screen and report the touch event to an application program.

If the driver layer in the mobile terminal determines that only the touch data collected by the inductance capacitance touch screen is received within the predetermined period of time, where the touch distance in the touch data is greater than the first threshold and smaller than the second threshold, the driver layer may encapsulate the touch data collected by the inductance capacitance touch screen into the touch event corresponding to the mutual capacitive touch screen and report the touch event to the application program.

Specifically, encapsulating, the driver layer, the touch data collected by the inductance capacitance touch screen into the touch event corresponding to the mutual capacitive touch screen may include the following steps:
1. Use coordinates of a touch point in the touch data as coordinates of a touch point in the touch event.
2. Set the touch area, the touch pressure, and the touch direction in the touch event to their respective predetermined values.
3. Report the touch event to an application program by using an interface corresponding to the mutual capacitive touch screen.

For example, the touch data collected by the inductance capacitance touch screen includes touch coordinates (X1, Y1) and the touch distance L, and then the driver layer may encapsulate the touch data into the touch event corresponding to the mutual capacitive touch screen: touch coordinates (X1, Y1), touch area (a predetermined value), touch pressure (a predetermined value), and touch direction (a predetermined value).

As another implementation manner, encapsulating, by the driver layer, the touch data collected by the inductance capacitance touch screen into the touch event corresponding to the mutual capacitive touch screen may also include the following steps:
1. Use the coordinates of the touch point in the touch data as the coordinates of the touch point in the touch event.
2. According to predetermined correspondence between the value of the touch distance and the touch area and predetermined correspondence between the value of the touch distance and touch pressure, query a value of the touch area and a value of the touch pressure that are corresponding to the touch distance; set the value of the touch area in the touch event to the found value of the touch area, and set the value of the touch pressure in the touch event to the found value of the touch pressure; and set the touch direction in the touch event to a predetermined value, where the predetermined correspondence includes: the value of the touch distance being in inverse proportion to the touch area, and the value of the touch distance being in inverse proportion to the touch pressure.
3. Report the touch event to the application program by using an interface corresponding to the mutual capacitive touch screen.

For example, the touch data collected by the inductance capacitance touch screen includes touch coordinates (X1, Y1) and the touch distance L, and then the driver layer may query the value S of the touch area and touch pressure P that are corresponding to L according to the predetermined correspondence between the value of the touch distance and the touch area and the predetermined correspondence between the value of the touch distance and touch pressure, and then the driver layer encapsulates the touch data into the touch event corresponding to the mutual capacitive touch screen: touch coordinates (X¹, Y¹), touch area (S), touch pressure (P), and touch direction (a predetermined value). The predetermined correspondence between the value of the touch distance and the touch area and the predetermined correspondence between the value of the touch distance and touch pressure may be calculated by research and development engineers according to data statistics when the finger of a user touches a screen.

In this embodiment, one of the above two modes may be selected at random.

Preferably, even if the user operates the mobile terminal by wearing a glove, two cases may also occur:
1. The user operates the mobile terminal by wearing a glove without touching the surface of the screen; in this case, the user regards that the user is performing an ordinary floating touch operation.
2. The user operates the mobile terminal by wearing a glove and touching the surface of the screen; in this case, the user regards that the user is performing an ordinary touch operation.

In the first case, to ensure that the parameter "touch distance" is still reported to the application program, the driver layer may encapsulate only the touch data meeting a predetermined condition into the touch event corresponding to the mutual capacitive touch screen in step 302, where the predetermined condition is that the touch distance in the touch data is greater than the first threshold and smaller than the second threshold. That is, the driver layer encapsulates the touch data collected by the inductance capacitance touch screen into the touch event corresponding to the mutual capacitive touch screen only in the second case. However, in the first case, the driver layer still encapsulates the touch data collected by the inductance capacitance touch screen into a touch event corresponding to the inductance capacitance touch screen.
Step 303: Encapsulate the touch data collected by the inductance capacitance touch screen into the touch event corresponding to the inductance capacitance touch screen and report the touch event to the application program.

If the driver layer in the mobile terminal determines that not only the touch data collected by the inductance capacitance touch screen is received within a predetermined period of time, or that the touch distance in the touch data is smaller than the first threshold or greater than the second threshold, the driver layer may encapsulate the subsequently received touch data collected by the inductance capacitance touch screen into the touch event corresponding to the inductance capacitance touch screen and report the touch event to the application program. At this time, the user may use both the inductance capacitance touch screen and the mutual capacitive touch screen, or the user uses the floating touch function of the inductance capacitance touch screen.

After step 302, the scenario in which the user puts off the glove may occur. If the user puts off the glove, when the user touches the screen and performs an operation, both the inductance capacitance touch screen and the mutual capacitive touch screen collect the touch data corresponding to the operation, and then the driver layer encapsulates the two pieces of touch data into touch events corresponding to the mutual capacitive touch screen and reports the touch events to the application program. This action is obviously unreasonable; and therefore, this embodiment further includes the following steps:
Step 304: Determine whether the touch data collected by the mutual capacitive touch screen is received, and if yes, go to step 305; if no, return to step 302.

After step 302, the driver layer may determine in real time whether the touch data collected by the mutual capacitive touch screen is received. Specifically, the driver layer may determine, according to an interrupt signal triggered by the mutual capacitive touch screen, that the touch data collected by the mutual capacitive touch screen is received.
Step 305: Encapsulate the touch data collected by the inductance capacitance touch screen into the touch event corresponding to the inductance capacitance touch screen and report the touch event.

In this case, the driver layer does not continue encapsulating the touch data collected by the inductance capacitance touch screen into the touch event corresponding to the mutual capacitive touch screen and reporting the touch event to the application program, but recovers encapsulating the touch data collected by the inductance capacitance touch screen into the touch event corresponding to the inductance capacitance touch screen and reporting the touch event. That is, the mobile terminal recovers to the initial state shown in step 301.

To sum up, compared with the second embodiment, in the method for reporting a touch event according to this embodiment, by determining whether only the touch data collected by the inductance capacitance touch screen is received within a period of time and determining the touch distance in the touch data collected by the inductance capacitance touch screen, whether the user operates the mobile terminal by wearing a glove or operates the mobile terminal without touching the surface of the screen can be distinguished, thereby reaching the effect of selectively encapsulating the touch data collected by the inductance capacitance touch screen into the touch event corresponding to the mutual capacitive touch screen, and ensuring the running effect of the application program that supports the processing of the touch event corresponding to the inductance capacitance touch screen.

In the third embodiment, the driver layer in the mobile terminal determines whether the user wears a glove to operate the mobile terminal, that is, the driver layer in the mobile terminal determines whether only the touch data collected by the inductance capacitance touch screen is received within a predetermined period of time, where the touch distance in the touch data is greater than the first threshold and smaller than the second threshold. However, whether only the touch data collected by the inductance capacitance touch screen is received within the predetermined period of time, where the touch distance in the touch data is greater than the first threshold and smaller than the second threshold, may also be determined by a predetermined application program, and then the predetermined application program instructs, according to a determination result, the driver layer to work. The following embodiment may be used for further reference:

### Embodiment 4

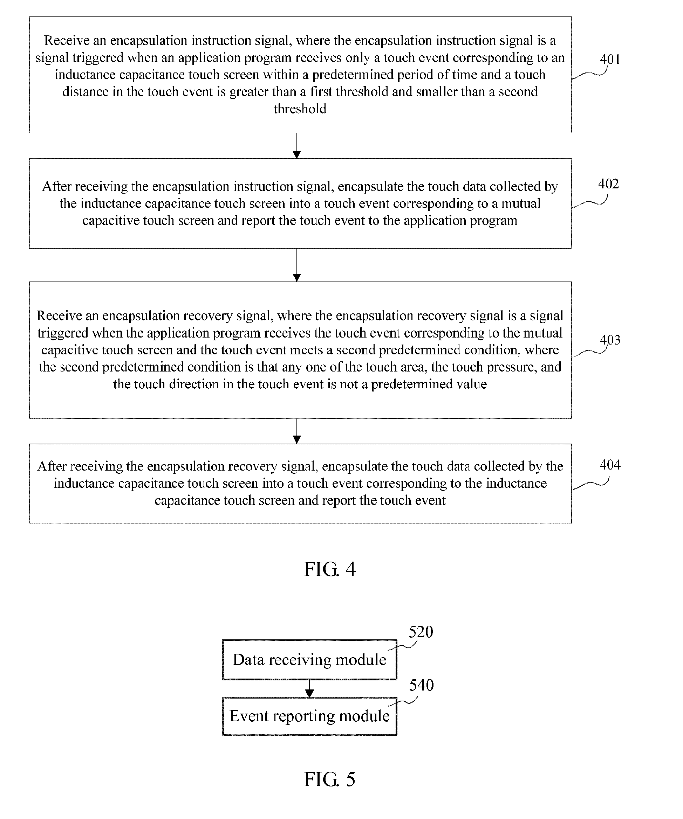

FIG. 4 is a flowchart of a method for reporting a touch event according to a fourth embodiment of the present invention. The method for reporting a touch event may be used in a mobile terminal that uses both a mutual capacitive touch screen and an inductance capacitance touch screen. The method for reporting a touch event may include:
Step 401: Receive an encapsulation instruction signal, where the encapsulation instruction signal is a signal triggered when a predetermined application program receives only a touch event corresponding to an inductance capacitance touch screen within a predetermined period of time and a touch distance in the touch event is greater than a first threshold and smaller than a second threshold.

In this embodiment, the predetermined application program in a mobile terminal implements the above determination process. Preferably, the predetermined application program may be a screen unlocking application program or a program that is always running on the background and is dedicated for implementing the above determination process; when the predetermined application program is a screen unlocking application program, the predetermined period of time may be a screen unlocking process. For ease of description, the following uses the screen unlocking application program as an example:
A screen unlocking application program may be preinstalled in the mobile terminal, where the screen unlocking application program supports both the floating touch unlocking mode and the ordinary touch unlocking mode, that is, the screen unlocking application program supports the processing of touch events reported by both the inductance capacitance touch screen and the mutual capacitive touch screen.

Because the screen unlocking application program is usually slide unlocking, in a screen unlocking process, the screen unlocking application program may receive a series of touch events reported by a driver layer, where the touch events may be touch events corresponding to the inductance capacitance touch screen that are obtained after the driver layer encapsulates, according to a normal mode, the touch data collected by the inductance capacitance touch screen; or may also be touch events corresponding to the mutual capacitive touch screen that are obtained after the driver layer encapsulates, according to a normal mode, the touch data collected by the mutual capacitive touch screen. If all the touch events received by the screen unlocking application program in a screen unlocking process are touch events corresponding to the inductance capacitance touch screen, and the touch distance in each touch event is greater than a first threshold and smaller than a second threshold, it may be regarded that a current user wears a glove to operate the mobile terminal.

This is because it is difficult to ensure that the touch distance in each of all touch events reported in a slide unlocking process can be greater than the first threshold and smaller than the second threshold even if the user performs the slide unlocking process in a floating touch mode. That is, the predetermined application program, such as the screen unlocking application program, is used to determine that a series of touch events reported by the driver layer within a period of time are all touch events corresponding to the inductance capacitance touch screen, where the touch distance in each of the touch events is greater than the first threshold and smaller than the second threshold, and an accuracy rate is relatively high.

In this case, the predetermined application program may send an encapsulation instruction signal to the driver layer.

It should still be noted that the above determination result only shows that it is possible but not definite that the user wears a glove to operate the mobile terminal.
Step 402: After receiving the encapsulation instruction signal, encapsulate the touch data collected by the inductance capacitance touch screen into a touch event corresponding to the mutual capacitive touch screen and report the touch event to the application program.

After receiving the encapsulation instruction signal, the driver layer encapsulates the subsequently received touch data collected by the inductance capacitance touch screen into a touch event corresponding to the mutual capacitive touch screen and reports the touch event to the application program.

Specifically, encapsulating, by the driver layer, the touch data collected by the inductance capacitance touch screen into the touch event corresponding to the mutual capacitive touch screen may include the following steps:
1. Use coordinates of a touch point in the touch data as coordinates of a touch point in the touch event.
2. Set the touch area, the touch pressure, and the touch direction in the touch event to their respective predetermined values.
3. Report the touch event to the application program by using an interface corresponding to the mutual capacitive touch screen.

For example, the touch data collected by the inductance capacitance touch screen includes touch coordinates (X1, Y1) and the touch distance L, and then the driver layer may encapsulate the touch data into the touch event corresponding to the mutual capacitive touch screen: touch coordinates (X1, Y1), touch area (a predetermined value), touch pressure (a predetermined value), and touch direction (a predetermined value).
Step 403: Receive an encapsulation recovery signal, where the encapsulation recovery signal is a signal triggered when the predetermined application program receives the touch event corresponding to the mutual capacitive touch screen and the touch event meets a second predetermined condition, where the second predetermined condition is that any one of the touch area, the touch pressure, and the touch direction in the touch event is not a predetermined value.

After step 402, the scenario in which the user puts off a glove may occur. If the user puts off the glove, when the user touches the screen and performs an operation, both the inductance capacitance touch screen and the mutual capacitive touch screen may collect the touch data corresponding to the operation at the same time, and then the driver layer may encapsulate the two pieces of touch data into touch events corresponding to the mutual capacitive touch screen and report the touch events to the application program. In this case, the predetermined application program may receive the two touch events simultaneously, and then determine, according to whether the touch area, touch pressure, and touch direction in each of the touch events are all predetermined values, whether the two touch events are obtained by encapsulating the touch data collected by the inductance capacitance touch screen, or are obtained by encapsulating the touch data collected by the mutual capacitive touch screen. If the predetermined application program receives a touch event, and any one of the touch area, touch pressure, and touch direction in the touch event is not a predetermined value, it indicates that the user has put off the glove.

In this case, the predetermined application program may send an encapsulation recovery signal to the driver layer.
Step 404: After receiving the encapsulation recovery signal, encapsulate the touch data collected by the inductance capacitance touch screen into a touch event corresponding to the inductance capacitance touch screen and report the touch event.

After receiving the encapsulation recovery signal, the driver layer encapsulates the touch data collected by the inductance capacitance touch screen into a touch event corresponding to the inductance capacitance touch screen and reports the touch event.

It should be noted that when step 403 and step 404 are executed, when the driver layer needs to encapsulate the touch data collected by the inductance capacitance touch screen into the touch event corresponding to the mutual capacitive touch screen, the touch area, touch pressure, and touch direction in the touch event must be set to their respective predetermined values, but the touch data cannot be encapsulated into the touch event corresponding to the mutual capacitive touch screen according to another implementation manner provided by the third embodiment; therefore, after step 401 and step 402, step 304 and step 305 provided by the third embodiment may also be executed and thus are combined into a new embodiment. Evidently, by analog, step 301, step 302, step 404, and step 405 may also be combined into a new embodiment. Details are not further given herein.

To sum up, compared with the third embodiment, in the method for reporting a touch event according to this embodiment, the predetermined application program is used to determine whether only the touch data collected by the inductance capacitance touch screen is received within a period of time and determine the touch distance in the touch data collected by the inductance capacitance touch screen, so that whether the user operates the mobile terminal by wearing a glove or operates the mobile terminal without touching the surface of the screen can be distinguished, thereby reaching the effect of selectively encapsulating the touch data collected by the inductance capacitance touch screen into the touch event corresponding to the mutual capacitive touch screen, and ensuring the running effect of the application program that supports the processing of the touch event corresponding to the inductance capacitance touch screen.

### Embodiment 5

FIG. 5 is a structural block diagram of an apparatus for reporting a touch event according to a fourth embodiment of the present invention. The apparatus for reporting a touch event may be applied in a mobile terminal. The apparatus for reporting a touch event may include a data receiving module 520 and an event reporting module 540.

The data receiving module 520 is configured to receive touch data collected by an inductance capacitance touch screen.

The event reporting module 540 is configured to encapsulate the touch data collected by the inductance capacitance touch screen into a touch event corresponding to a mutual capacitive touch screen and report the touch event to an application program.

Specifically, the touch data collected by the inductance capacitance touch screen includes coordinates of a touch point and a touch distance, and the touch event corresponding to the mutual capacitive touch screen includes coordinates of a touch point, a touch area, touch pressure, and a touch direction.

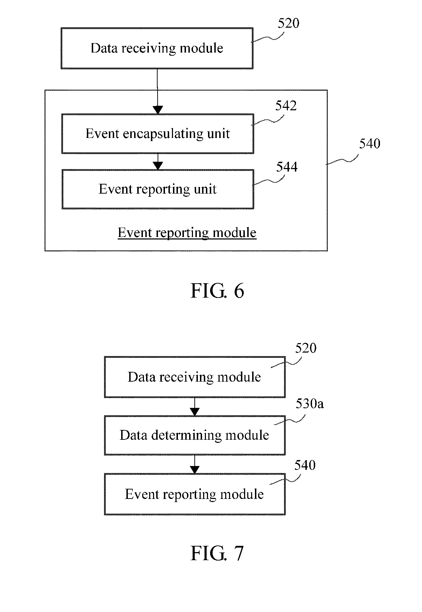

The event reporting module 540 may specifically include an event encapsulating unit 542 and an event reporting unit 544, as shown in FIG. 6. The event encapsulating unit 542 is configured to use the coordinates of the touch point in the touch data as the coordinates of the touch point in the touch event; and the event reporting unit 544 is configured to report the touch event obtained by the event encapsulating unit 542 to the application program by using an interface corresponding to the mutual capacitive touch screen.

To sum up, with the apparatus for reporting a touch event according to this embodiment, the touch data collected by the inductance capacitance touch screen is encapsulated into the touch event corresponding to the mutual capacitive touch screen and the touch event is reported, thereby solving the problem that an application program of an earlier version cannot be used when a mobile terminal can receive only the touch data collected by the inductance capacitance touch screen, and reaching the technical effect that the application program that only supports the processing of the touch event reported by the mutual capacitive touch screen can still be used even if the mobile terminal can receive only the touch data collected by the inductance capacitance touch screen.

### Embodiment 6

FIG. 7 is a structural block diagram of an apparatus for reporting a touch event according to a fifth embodiment of the present invention. The apparatus for reporting a touch event may be applied in a mobile terminal. The apparatus for reporting a touch event may include a data receiving module 520, a data determining module 530, and an event reporting module 544.

The data receiving module 520 is configured to receive touch data collected by an inductance capacitance touch screen. The touch data collected by the inductance capacitance touch screen includes coordinates of a touch point and a touch distance.

The data determining module 530a is configured to determine whether only the touch data collected by the inductance capacitance touch screen is received within a predetermined period of time, where the touch distance in the touch data is greater than a first threshold and smaller than a second threshold.

The event reporting module 540 is configured to: if the determination result of the data determining module 530 is yes, encapsulate the touch data collected by the inductance capacitance touch screen into a touch event corresponding to a mutual capacitive touch screen and report the touch event to an application program. The event reporting module 540 may include an event encapsulating unit 542 and an event reporting unit 544. The event encapsulating unit 542 is specifically configured to: use the coordinates of the touch point in the touch data as coordinates of a touch point in the touch event; set a touch area, touch pressure, and a touch direction in the touch event to their respective predetermined values; or according to predetermined correspondence between the value of the touch distance and the touch area and predetermined correspondence between the value of the touch distance and touch pressure, query the value of the touch area and the value of the touch pressure that are corresponding to the touch distance; set the value of the touch area in the touch event to the found value of the touch area, and set the value of the touch pressure in the touch event to the found value of the touch pressure; and set the touch direction in the touch event to a predetermined value. The event reporting unit 544 is configured to report the touch event obtained by the event encapsulating unit 542 to the application program by using an interface corresponding to the mutual capacitive touch screen. The predetermined correspondence includes: the value of the touch distance being in inverse proportion to the touch area, and the value of the touch distance being in inverse proportion to the touch pressure.

Preferably, the event reporting module 540 is specifically configured to encapsulate only touch data meeting a first predetermined condition into the touch event corresponding to the mutual capacitive touch screen and report the touch event to the application program, where the first predetermined condition is that the touch distance in the touch data is greater than the first threshold and smaller than the second threshold.

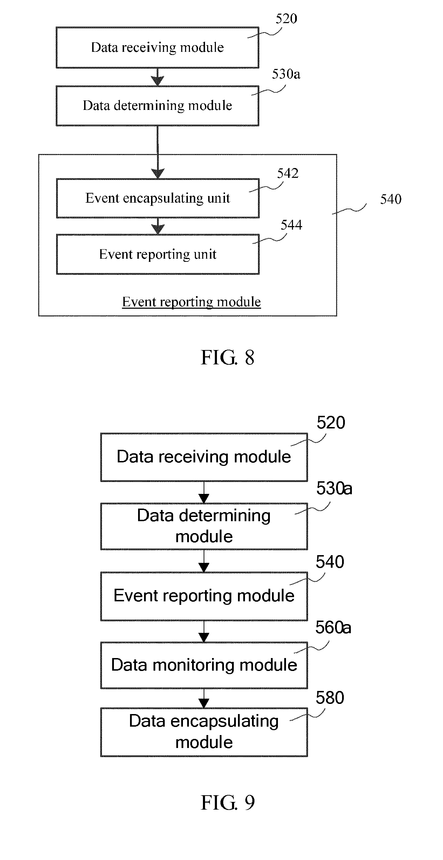

Preferably, the apparatus for reporting a touch event may further include a data monitoring module 560a and a data encapsulating module 580a, as shown in FIG. 9. The data monitoring module 560a is configured to determine whether touch data collected by the mutual capacitive touch screen is received. The data encapsulating module 580a is configured to: if the determination result of the data monitoring module 560a is yes, encapsulate the touch data collected by the inductance capacitance touch screen into a touch event corresponding to the inductance capacitance touch screen and report the touch event.

To sum up, compared with the fifth embodiment, in the apparatus for reporting a touch event according to this embodiment, whether a user operates a mobile terminal by wearing a glove or operates a mobile terminal without touching the surface of the screen can be distinguished through a data determining module and a specific encapsulating unit, thereby reaching the effect of selectively encapsulating the touch data collected by the inductance capacitance touch screen into a touch event corresponding to the mutual capacitive touch screen, and ensuring the running effect of the application program that supports the processing of the touch event corresponding to the inductance capacitance touch screen.

### Embodiment 7

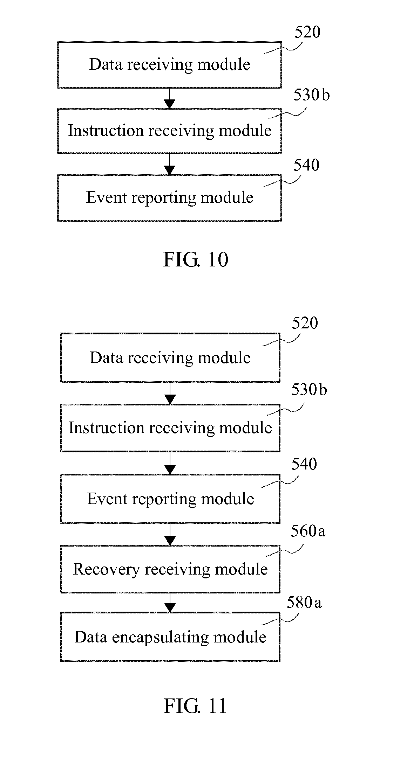

FIG. 10 is a structural block diagram of an apparatus for reporting a touch event according to a seventh embodiment of the present invention. The apparatus for reporting a touch event may be applied in a mobile terminal. The apparatus for reporting a touch event may include a data receiving module 520, an instruction receiving module 530b, and an event reporting module 540.

The data receiving module 520 is configured to receive touch data collected by an inductance capacitance touch screen. The touch data collected by the inductance capacitance touch screen includes coordinates of a touch point and a touch distance.

The instruction receiving module 530b is configured to receive an encapsulation instruction signal, where the encapsulation instruction signal is a signal triggered when a predetermined application program receives only a touch event corresponding to the inductance capacitance touch screen within a predetermined period of time and a touch distance in the touch event is greater than a first threshold and smaller than a second threshold. The predetermined application program may be a screen unlocking application program, and the predetermined period of time may be a period of time corresponding to a screen unlocking process.

The event reporting module 540 is specifically configured to: after the instruction receiving module 530b receives the encapsulation instruction signal, encapsulate the touch data collected by the inductance capacitance touch screen into a touch event corresponding to a mutual capacitive touch screen and report the touch event to an application program.

The event reporting module 540 may include an event encapsulating unit 542 and an event reporting unit 544. The event encapsulating unit 542 is specifically configured to use the coordinates of the touch point in the touch data as coordinates of a touch point in the touch event, and set a touch area, touch pressure, and a touch direction in the touch event to their respective predetermined values. The event reporting unit 544 is configured to report the touch event obtained by the event encapsulating unit 542 to the application program by using an interface corresponding to the mutual capacitive touch screen. Predetermined correspondence includes: a value of the touch distance being in inverse proportion to the touch area, and the value of the touch distance being in inverse proportion to the touch pressure.

Preferably, the event reporting module 540 is specifically configured to encapsulate only touch data meeting a first predetermined condition into the touch event corresponding to the mutual capacitive touch screen and report the touch event to the application program, where the first predetermined condition is that the touch distance in the touch data is greater than the first threshold and smaller than the second threshold.

Preferably, the apparatus for reporting a touch event may further include a recovery receiving module 560b and a data encapsulating module 580b, as shown in FIG. 11. The recovery receiving module 560b is configured to receive an encapsulation recovery signal, where the encapsulation recovery signal is a signal triggered when the predetermined application program receives the touch event corresponding to the mutual capacitive touch screen and the touch event meets a second predetermined condition, where the second predetermined condition is that any one of the touch area, the touch pressure, and the touch direction in the touch event is not a predetermined value. The data encapsulating module 580b is configured to: after the recovery receiving module 560b receives the encapsulation recovery signal, encapsulate the touch data collected by the inductance capacitance touch screen into the touch event corresponding to the inductance capacitance touch screen and report the touch event.

To sum up, compared with the sixth embodiment, in the apparatus for reporting a touch event according to this embodiment, the determination performed on the touch event is implemented through a predetermined application program and especially a screen unlocking application program, and whether the user wears a glove to operate the mobile terminal can be more correctly determined.

It should be noted that when the apparatus for reporting a touch event according to the above embodiment reports a touch event, the division of the above functional modules is used for illustration only. In actual applications, the above functions may be completed by different functional modules according to requirements, that is, the internal structure of the apparatus is divided into different functional modules for completing all or a part of the functions described above. In addition, the apparatus for reporting a touch event according to the above embodiment and the method for reporting a touch event are based on the same concept, and for a specific implementation process, reference is made to the method embodiment and details are not further described herein.

### Embodiment 8

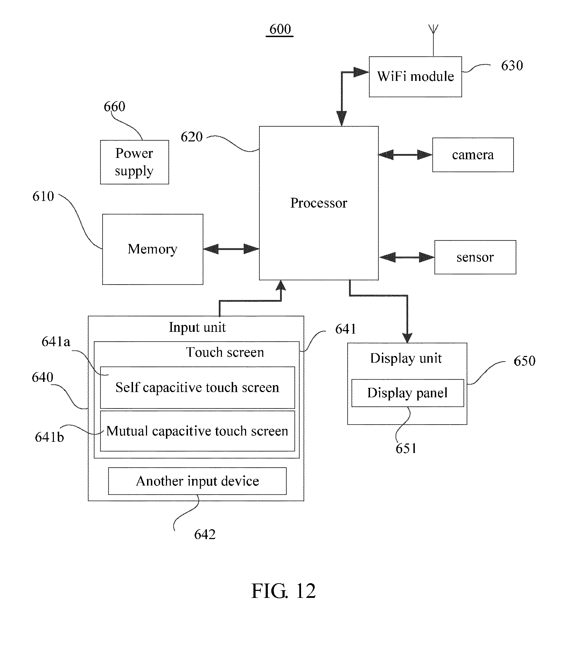

FIG. 12 is a structural block diagram of a mobile terminal according to a seventh embodiment of the present invention. The mobile terminal may be used to implement the methods of the first embodiment to the fourth embodiment of the present invention. For ease of description, only the part related to the embodiment of the present invention is shown. For technical details not disclosed herein, reference may be made to the first embodiment to the fourth embodiment of the present invention.

The mobile terminal may include a mobile phone, a tablet, and an ebook reader. The mobile terminal 600 may include parts, such as a memory 610, a processor 620, a WiFi (wireless fidelity, wireless fidelity) module 630, an input unit 640, a display unit 650, and a power supply 660. Those skilled in the art may understand that the structure of the mobile terminal shown in FIG. 12 does not constitute limitation on the mobile terminal, and the mobile terminal may include more or fewer parts than those shown in FIG. 12, or combine some parts, or have different arrangements of parts.

The following specifically describes the parts constituting the mobile terminal 600 with reference to FIG. 12:
The memory 610 may be configured to store a software program and module. The processor 620 runs the software program and module stored in the memory 610 to execute various function applications and data processing of the mobile terminal 600. The memory 610 may mainly include a storage program area and a storage data area. The storage program area may store an operating system, an application program required by at least one function (for example, a screen unlocking function and a corresponding touch function), and so on. The storage data area may store the data (such as data collected by a touch screen) created according to the use of the mobile terminal 600, and so on. In addition, the memory 610 may include a high-rate random access memory, and may further include a non-volatile memory, for example, at least one disk storage component, a flash component, or other volatile solid state storage components.

The processor 620 is the control center of the mobile terminal 600, connects each part of the mobile terminal by using various interfaces and lines, executes various functions and data processing of the mobile terminal 600 by running or executing the software program and/or module in the memory 610 and invoking the data stored in the memory 610, so as to perform overall monitoring for the mobile terminal. Optionally, the processor 620 may include one or more processing units. Preferably, the processor 620 may integrate an application processor and a modulation and demodulation processor, where the application processor mainly processes an operating system, a user interface, an application program, and so on, and the modulation and demodulation processor mainly processes wireless communication. It can be understood that the above modulation and demodulation processor may also not be integrated into the processor 620.

WiFi is a short-distance wireless transmission technology. The mobile terminal 600 may help, through the WiFi module 630, a user to receive and send an email, browse a Web page, or access streaming media, and so on, and WiFi provides wireless broadband Internet access for the user. Though FIG. 11 shows the WiFi module 630, it can be understood that the WiFi module 630 is not a necessary part of the mobile terminal 600, and can be omitted according to requirements without changing the essence of the present invention.

The input unit 640 may be configured to receive an inputted number or inputted character information, and generate key signal input related to the user setting and function control of the mobile terminal 600. Specifically, the input unit 640 may include a touch screen 641 and another input device 642. The touch screen 641 may collect a touch operation on or near the touch screen 641 (for example, the operation performed on or near the touch screen 641 by a user by using a finger, a stylus, and any other suitable object or accessory). In this embodiment, the touch screen 641 includes an inductance capacitance touch screen 641a and a mutual capacitive touch screen 641b. The data collected by the touch screen 641 may be stored in the memory 610. In addition to the touch screen 641, the input unit 640 may include another input device 642. Specifically, the another input device 642 may include, but not limited to, one or more of a physical keyboard, a function key (for example, a volume control key, and a switch key), a track ball, a mouse, and a joystick.

The display unit 650 may be configured to display the information inputted by the user or the information provided for the user and various menus of the mobile terminal 600. The display unit 650 may include a display panel 651, and optionally, may use the form, such as an LCD (Liquid Crystal Display, liquid crystal display) or an OLED (Organic Light-Emitting Diode, organic light-emitting diode), to configure the display panel 651. Further, the touch screen 641 may cover the display panel 651; when the touch screen 641 detects a touch operation on or near the touch screen 641, the touch screen 641 transmits the touch data to the processor 620 to determine the type of a touch event; then the processor 20 provides the corresponding video output on the display panel 651 according to the type of the touch event. In FIG. 12, the touch screen 641 and the display panel 651 serve as two separate parts to implement the input and output functions of the mobile terminal 600, but in some embodiments, the touch screen 641 and the display panel 651 may be integrated to implement the input and output functions of the mobile terminal 600.

The mobile terminal 600 further includes a power supply 660 (such as a battery) supplying power to each part. Preferably, the power supply may be logically connected to the processor 620 through a power supply management system to implement functions, such as managing charging and discharging, and managing power consumption, through the power supply management system.

The mobile terminal 600 may further include a camera, a Bluetooth module, an audio circuit, and a speaker, which are not shown in FIG. 12, and details are not described herein.

In this embodiment of the present invention, the memory 610, processor 620, and touch screen 641 included in the terminal further have the following functions:
The processor 620 is configured to receive touch data collected by the inductance capacitance touch screen 641a.

The processor 620 is further configured to encapsulate the touch data collected by the inductance capacitance touch screen 641a into a touch event corresponding to a mutual capacitive touch screen and report the touch event to an application program.

Specifically, the processor 620 is configured to use coordinates of a touch point in the touch data as coordinates of a touch point in the touch event; and report the touch event to an application program by using an interface corresponding to the mutual capacitive touch screen 641b.

Because the touch data collected by the inductance capacitance touch screen 641a includes coordinates of the touch point and a touch distance, and the touch event corresponding to the mutual capacitive touch screen 641b includes coordinates of the touch point, a touch area, touch pressure, and a touch direction.

In a more preferred implementation manner, the processor 620 is specifically configured to: use the coordinates of the touch point in the touch data as the coordinates of the touch point in the touch event; set the touch area, the touch pressure, and the touch direction in the touch event to their respective predetermined values; or according to predetermined correspondence between a value of the touch distance and the touch area and touch pressure, query a value of the touch area and a value of the touch pressure that are corresponding to the touch distance; set the value of the touch area in the touch event touch area to the found value of the touch area, and set the value of the touch pressure in the touch event to the found value of the touch pressure; and set the touch direction in the touch event to a predetermined value; report the touch event to the application program by using the interface corresponding to the mutual capacitive touch screen; where the predetermined correspondence includes: the value of the touch distance being in inverse proportion to the touch area, and the value of the touch distance being in inverse proportion to the touch pressure; and report the touch event to the application program by using the interface corresponding to the mutual capacitive touch screen 641b.

In a more preferred implementation manner, the processor 620 is specifically configured to encapsulate only touch data meeting a first predetermined condition into the touch event corresponding to the mutual capacitive touch screen 641b and report the touch event to the application program, where the first predetermined condition is that the touch distance in the touch data is greater than a first threshold and smaller than a second threshold.

In a more preferred implementation manner, before the encapsulating the touch data collected by the inductance capacitance touch screen into the touch event corresponding to the mutual capacitive touch screen and reporting the touch event to the application program,
the processor 620 is further configured to: determine whether only the touch data collected by the inductance capacitance touch screen 641a is received within a predetermined period of time, where the touch distance in the touch data is greater than the first threshold and smaller than the second threshold; if a determination result is yes, perform the step of encapsulating the touch data collected by the inductance capacitance touch screen into the touch event corresponding to the mutual capacitive touch screen and reporting the touch event to the application program.

In a more preferred implementation manner, before the encapsulating the touch data collected by the inductance capacitance touch screen into the touch event corresponding to the mutual capacitive touch screen and reporting the touch event to the application program,
the processor 620 is further configured to: receive an encapsulation instruction signal, where the encapsulation instruction signal is a signal triggered when a predetermined application program receives only a touch event corresponding to the inductance capacitance touch screen within a predetermined period of time and a touch distance in the touch event is greater than the first threshold and smaller than the second threshold; after receiving the encapsulation instruction signal, perform the step of encapsulating the touch data collected by the inductance capacitance touch screen into the touch event corresponding to the mutual capacitive touch screen and reporting the touch event to the application program.

More preferably, the predetermined application program is a screen unlocking application program, and the predetermined period of time is a period of time corresponding to a screen unlocking process.

In a more preferred implementation manner, after the encapsulating the touch data collected by the inductance capacitance touch screen into the touch event corresponding to the mutual capacitive touch screen and reporting the touch event to the application program,
the processor 620 is further configured to: determine whether the touch data collected by the mutual capacitive touch screen is received; if a determination result is yes, encapsulate the touch data collected by the inductance capacitance touch screen into the touch event corresponding to the inductance capacitance touch screen and report the touch event.

In a more preferred implementation manner, after the encapsulating the touch data collected by the inductance capacitance touch screen into the touch event corresponding to the mutual capacitive touch screen and reporting the touch event to the application program,
the processor 620 is further configured to: receive an encapsulation recovery signal, where the encapsulation recovery signal is a signal triggered when the application program receives the touch event corresponding to the mutual capacitive touch screen and the touch event meets a second predetermined condition, where the second predetermined condition is that any one of the touch area, the touch pressure, and the touch direction in the touch event is not a predetermined value; and after receiving the encapsulation recovery signal, encapsulate the touch data collected by the inductance capacitance touch screen into the touch event corresponding to the inductance capacitance touch screen and report the touch event.

To sum up, with the mobile terminal according to this embodiment, the touch data collected by the inductance capacitance touch screen is encapsulated into the touch event corresponding to the mutual capacitive touch screen and the touch event is reported, thereby solving the problem that an application program of an earlier version cannot be used when a mobile terminal can receive only the touch data collected by the inductance capacitance touch screen, and reaching the technical effect that the application program that only supports the processing of the touch event reported by the mutual capacitive touch screen can still be used even if the mobile terminal can receive only the touch data collected by the inductance capacitance touch screen.

Persons of ordinary skill in the art can understand that all or a part of the steps of the foregoing embodiments may be implemented through hardware, or may be implemented by a program instructing relevant hardware. The program may be stored in a computer readable storage medium. The storage medium may be a read-only memory, a magnetic disk, an optical disk, or the like.

The above description is merely about exemplary embodiments of the present invention, but not intended to limit the present invention. Any modification, equivalent replacement, or improvement made without departing from the idea and principle of the present invention should fall within the protection scope of the present invention.

## Claims

1. A method for reporting a touch event, comprising:
receiving touch data collected by an inductance capacitance touch screen; and
encapsulating the touch data collected by the inductance capacitance touch screen into a touch event corresponding to a mutual capacitive touch screen and reporting the touch event to an application program.

2. The method for reporting a touch event according to claim 1, wherein the touch data collected by the inductance capacitance touch screen comprises coordinates of a touch point, and the touch event corresponding to the mutual capacitive touch screen comprises coordinates of a touch point; and
the encapsulating the touch data collected by the inductance capacitance touch screen into the touch event corresponding to the mutual capacitive touch screen and reporting the touch event to the application program specifically comprise:
using the coordinates of the touch point in the touch data as the coordinates of the touch point in the touch event; and
reporting the touch event to the application program using an interface corresponding to the mutual capacitive touch screen.

3. The method for reporting a touch event according to claim 2, wherein the touch data collected by the inductance capacitance touch screen further comprises a touch distance, and the touch event corresponding to the mutual capacitive touch screen further comprises a touch area, touch pressure, and a touch direction; and
the encapsulating the touch data collected by the inductance capacitance touch screen into the touch event corresponding to the mutual capacitive touch screen and reporting the touch event to the application program specifically comprise:
using the coordinates of the touch point in the touch data as the coordinates of the touch point in the touch event;
setting the touch area, the touch pressure, and the touch direction in the touch event to their respective predetermined values; or according to predetermined correspondence between a value of the touch distance and the touch area and touch pressure, querying a value of the touch area and a value of the touch pressure that are corresponding to the touch distance; setting a value of the touch area in the touch event to the found value of the touch area, and setting a value of the touch pressure in the touch event to the found value of the touch pressure; and setting the touch direction in the touch event to a predetermined value; and
reporting the touch event to the application program using the interface corresponding to the mutual capacitive touch screen;
wherein the predetermined correspondence comprises: the value of the touch distance being in inverse proportion to the touch area, and the value of the touch distance being in inverse proportion to the touch pressure.

4. The method for reporting a touch event according to any one of claims 1 to 3, wherein the touch data collected by the inductance capacitance touch screen comprises the touch distance; and
the encapsulating the touch data collected by the inductance capacitance touch screen into the touch event corresponding to the mutual capacitive touch screen and reporting the touch event to the application program specifically comprise:
encapsulating only touch data meeting a first predetermined condition into the touch event corresponding to the mutual capacitive touch screen and reporting the touch event to the application program, wherein the first predetermined condition is that the touch distance in the touch data is greater than a first threshold and smaller than a second threshold.

5. The method for reporting a touch event according to any one of claims 1 to 4, wherein the touch data collected by the inductance capacitance touch screen comprises the touch distance; and
before the encapsulating the touch data collected by the inductance capacitance touch screen into the touch event corresponding to the mutual capacitive touch screen and reporting the touch event to the application program, the method further comprises:
determining whether only the touch data collected by the inductance capacitance touch screen is received within a predetermined period of time, wherein the touch distance in the touch data is greater than the first threshold and smaller than the second threshold; and
if a determination result is yes, performing the encapsulating the touch data collected by the inductance capacitance touch screen into the touch event corresponding to the mutual capacitive touch screen and reporting the touch event to the application program.

6. The method for reporting a touch event according to any one of claims 1 to 4, wherein:
the touch data collected by the inductance capacitance touch screen comprises the touch distance; and
before the encapsulating the touch data collected by the inductance capacitance touch screen into the touch event corresponding to the mutual capacitive touch screen and reporting the touch event to the application program, the method further comprises:
receiving an encapsulation instruction signal, wherein the encapsulation instruction signal is a signal triggered when a predetermined application program receives only a touch event corresponding to the inductance capacitance touch screen within a predetermined period of time and a touch distance in the touch event is greater than the first threshold and smaller than the second threshold; and
after receiving the encapsulation instruction signal, performing the encapsulating the touch data collected by the inductance capacitance touch screen into the touch event corresponding to the mutual capacitive touch screen and reporting the touch event to the application program.

7. The method for reporting a touch event according to claim 6, wherein the predetermined application program is a screen unlocking application program and the predetermined period of time is a period of time corresponding to a screen unlocking process.

8. The method for reporting a touch event according to any one of claims 5 to 7, wherein after the encapsulating the touch data collected by the inductance capacitance touch screen into the touch event corresponding to the mutual capacitive touch screen and reporting the touch event to the application program, the method further comprises:
determining whether touch data collected by the mutual capacitive touch screen is received; and
if a determination result is yes, encapsulating the touch data collected by the inductance capacitance touch screen into the touch event corresponding to the inductance capacitance touch screen and reporting the touch event.

9. The method for reporting a touch event according to claim 6 or 7, wherein: the encapsulating the touch data collected by the inductance capacitance touch screen into the touch event corresponding to the mutual capacitive touch screen and reporting the touch event to the application program specifically comprise: setting the touch area, the touch pressure, and the touch direction in the touch event to their respective predetermined values,
after the encapsulating the touch data collected by the inductance capacitance touch screen into the touch event corresponding to the mutual capacitive touch screen and reporting the touch event to the application program, the method further comprises:
receiving an encapsulation recovery signal, wherein the encapsulation recovery signal is a signal triggered when the predetermined application program receives the touch event corresponding to the mutual capacitive touch screen and the touch event meets a second predetermined condition, wherein the second predetermined condition is that any one of the touch area, the touch pressure, and the touch direction in the touch event is not a predetermined value; and
after receiving the encapsulation recovery signal, encapsulating the touch data collected by the inductance capacitance touch screen into the touch event corresponding to the inductance capacitance touch screen and reporting the touch event.

10. An apparatus for reporting a touch event, comprising:
a data receiving module, configured to receive touch data collected by an inductance capacitance touch screen; and
an event reporting module, configured to encapsulate the touch data collected by the inductance capacitance touch screen into a touch event corresponding to a mutual capacitive touch screen and report the touch event to an application program.

11. The apparatus for reporting a touch event according to claim 10, wherein the touch data collected by the inductance capacitance touch screen comprises coordinates of a touch point, and the touch event corresponding to the mutual capacitive touch screen comprises coordinates of a touch point; and
the event reporting module specifically comprises: an event encapsulating unit and an event reporting unit, wherein
the event encapsulating unit is configured to use the coordinates of the touch point in the touch data as the coordinates of the touch point in the touch event; and
the event reporting unit is configured to report the touch event obtained by the event encapsulating unit to the application program by using an interface corresponding to the mutual capacitive touch screen.

12. The apparatus for reporting a touch event according to claim 11, wherein the touch data collected by the inductance capacitance touch screen further comprises a touch distance, and the touch event corresponding to the mutual capacitive touch screen further comprises a touch area, touch pressure, and a touch direction;
the event encapsulating unit is specifically configured to: use the coordinates of the touch point in the touch data as the coordinates of the touch point in the touch event; set the touch area, the touch pressure, and the touch direction in the touch event to their respective predetermined values; or according to predetermined correspondence between a value of the touch distance and the touch area and touch pressure, query a value of the touch area and a value of the touch pressure that are corresponding to the touch distance; set a value of the touch area in the touch event to the found value of the touch area, and set a value of the touch pressure in the touch event to the found value of the touch pressure; and set the touch direction in the touch event to a predetermined value; and
the event reporting unit is configured to report the touch event obtained by the event encapsulating unit to the application program by using the interface corresponding to the mutual capacitive touch screen;
wherein the predetermined correspondence comprises: the value of the touch distance being in inverse proportion to the touch area, and the value of the touch distance being in inverse proportion to the touch pressure.

13. The apparatus for reporting a touch event according to any one of claims 10 to 12, wherein the touch data collected by the inductance capacitance touch screen comprises the touch distance; and
the event reporting module is specifically configured to encapsulate only touch data meeting a first predetermined condition into the touch event corresponding to the mutual capacitive touch screen and report the touch event to the application program, wherein the first predetermined condition is that the touch distance in the touch data is greater than a first threshold and smaller than a second threshold.

14. The apparatus for reporting a touch event according to any one of claims 10 to 13, wherein the touch data collected by the inductance capacitance touch screen comprises the touch distance;
the apparatus for reporting a touch event further comprises a data determining module, wherein
the data determining module is configured to determine whether only the touch data collected by the inductance capacitance touch screen is received within a predetermined period of time, wherein the touch distance in the touch data is greater than the first threshold and smaller than the second threshold; and
the event reporting module is specifically configured to: if a determination result of the data determining module is yes, perform the step of encapsulating the touch data collected by the inductance capacitance touch screen into the touch event corresponding to the mutual capacitive touch screen and reporting the touch event to the application program.

15. The apparatus for reporting a touch event according to any one of claims 10 to 13, wherein the touch data collected by the inductance capacitance touch screen comprises the touch distance;
the apparatus for reporting a touch event further comprises an instruction receiving module, wherein
the instruction receiving module is configured to receive an encapsulation instruction signal, wherein the encapsulation instruction signal is a signal triggered when a predetermined application program receives only a touch event corresponding to the inductance capacitance touch screen within a predetermined period of time and a touch distance in the touch event is greater than the first threshold and smaller than the second threshold; and
the event reporting module is specifically configured to: after the instruction receiving module receives the encapsulation instruction signal, perform the step of encapsulating the touch data collected by the inductance capacitance touch screen into the touch event corresponding to the mutual capacitive touch screen and reporting the touch event to the application program.

16. The apparatus for reporting a touch event according to claim 15, wherein the predetermined application program is a screen unlocking application program and the predetermined period of time is a period of time corresponding to a screen unlocking process.

17. The apparatus for reporting a touch event according to any one of claims 14 to 16, wherein the apparatus for reporting a touch event further comprises a data monitoring module and a data encapsulating module, wherein
the data monitoring module is configured to determine whether touch data collected by the mutual capacitive touch screen is received; and
the data encapsulating module is configured to: if a determination result of the data monitoring module is yes, encapsulate the touch data collected by the inductance capacitance touch screen into the touch event corresponding to the inductance capacitance touch screen and report the touch event.

18. The apparatus for reporting a touch event according to claim 15 or 16, wherein the event encapsulating unit is specifically configured to use the coordinates of the touch point in the touch data as the coordinates of the touch point in the touch event, and set the touch area, the touch pressure, and the touch direction in the touch event to their respective predetermined values; and
the apparatus for reporting a touch event further comprises a recovery receiving module and a data encapsulating module, wherein
the recovery receiving module is configured to receive an encapsulation recovery signal, wherein the encapsulation recovery signal is a signal triggered when the predetermined application program receives the touch event corresponding to the mutual capacitive touch screen and the touch event meets a second predetermined condition, wherein the second predetermined condition is that any one of the touch area, the touch pressure, and the touch direction in the touch event is not a predetermined value; and
the data encapsulating module is configured to: after the recovery receiving module receives the encapsulation recovery signal, encapsulate the touch data collected by the inductance capacitance touch screen into the touch event corresponding to the inductance capacitance touch screen and report the touch event.

19. A mobile terminal, wherein the mobile terminal comprises the apparatus for reporting a touch event according to any one of claims 10 to 18.

20. A mobile terminal, wherein the mobile terminal comprises an inductance capacitance touch screen, a mutual capacitive touch screen, a memory, and a processor, and is configured to execute the method for reporting a touch event according to any one of claims 1 to 9.
